# EUROPÄISCHE PATENTSCHRIFT

(11) **EP 0 585 482 B1**
(45) Veröffentlichungstag und Bekanntmachung des Hinweises auf die Patenterteilung: **10.01.1996**
(21) Anmeldenummer: 92114862.3
(22) Anmeldetag: 31.08.1992
(51) Int. Cl.: H01S 3/03

(54) **Bandleiterlaser mit Verbundelektroden**
Slab laser with composite electrode
Laser à ruban avec électrode composite

(43) Veröffentlichungstag der Anmeldung: 09.03.1994
(73) Patentinhaber: CARL ZEISS JENA GmbH, D-07745 Jena (DE)
(72) Erfinder: Welsch, Wolfgang, Dr.-Ing., W-8011 Baldham (DE); Krüger, Hans, Dipl.-Phys., W-8000 München 83 (DE); Mammach, Peter, W-8025 Unterhaching (DE); Hübner, Klemens, Dipl.-Ing. (FH), W-8012 Ottobrunn (DE); Arndt, Karlheinz, Dipl.-Ing. (FH), W-8000 München 83 (DE)
(74) Vertreter: Muhsfeldt, Willi

(56) Entgegenhaltungen:
- EP-A- 0 477 864
- WO-A-89/00350
- US-A- 4 719 639
- SOVIET JOURNAL OF QUANTUM ELECTRONICS Bd. 11, Nr. 5, Mai 1981, NEW YORK US Seiten 666 - 667 S.P.VOL SKAYA ET AL. 'WAVEGUIDE CO2 LASER WITH HIGH-FREQUENCY EXCITATION'

## Beschreibung

Die Erfindung betrifft einen hochfrequenzangeregten diffusionsgekühlten Bandleiterlaser, mit zwei mit Kühlkanälen und mit Mitteln zur gegenseitigen Fixierung versehenen Metallelektroden, zwischen denen ein Entladungsspalt gebildet ist, wobei die Elektroden dem Entladungsspalt zugewandte Wellenleiterflächen aufweisen und wobei ihre Breite ein Vielfaches ihres Abstandes beträgt, und mit Resonatorspiegeln, die einen instabilen Resonator bilden. Ein derartiger Bandleiterlaser ist aus der EP-A-0 477 865 bekannt.

Bis vor einigen Jahren standen der Konstruktion eines CO₂-Hochleistungslasers in Kompaktbauweise unüberwindliche Schwierigkeiten entgegen. Bedingt durch die physikalischen Prozesse bei der Laseranregung ist der Wirkungsgrad sehr stark von einer nicht zu hohen Gastemperatur, in der Praxis also von einer effektiven Entfernung überschüssiger Wärme aus dem Lasergas abhängig. Bei diffusionsgekühlten CO₂-Lasern, bei denen die Wärme durch einen stationären Wärmeleitungsprozeß von der heißesten Stelle im Zentrum des Laserplasmas zu den gekühlten Wänden des Entladungsgefäßes transportiert wird, hat sich herausgestellt, daß die Laserausgangsleistung nur von der Länge und nicht vom Durchmesser der Entladung abhängt. In der Folge wurden deshalb einerseits aufwendige Faltungskonzepte entwickelt, um trotz Leistungen bis den kW-Bereich hinein kompakte Abmessungen des Lasers beizubehalten, andererseits wurden schnell geströmte, also konvektionsgekühlte Laser entwickelt. Schnell geströmte Laser der Leistungsklasse 500 bis über 10.000 W sind derzeit kommerziell erhältlich. Diese nicht für einen abgeschlossenen ("sealed-off")Betrieb vorgesehenen Laser sind jedoch voluminös, haben ein hohes leistungsspezifisches Gewicht und sind auf eine kostenungünstige externe Gasversorgung und auf Pumpen für schnelle Gasumwälzung angewiesen.

Aus den genannten Gründen waren bisher nur sogenannte Wellenleiterlaser mit Leistungen bis zu 200 W als kompakte diffusionsgekühlte CO₂-Laser erhältlich. Inzwischen sind jedoch beispielsweise aus der EP-A-0 305 893 die Grundlagen eines Bandleiterlasers bekannt, dessen Entladungsraum im Gegensatz zum Wellenleiterlaser keinen quadratischen Querschnitt aufweist, sondern der auf flächenhaften, zur Seite hin offenen Wellenleiterstrukturen basiert. Die Kombination eines derartigen, quasi eindimensionalen Wellenleiters mit einem instabilen Resonator in orthogonaler Richtung ermöglicht dabei eine beugungsbegrenzte Grundmode-Laserstrahlung. Bei diesem Bandleiterkonzept wird die Wärme großflächig von den eng benachbarten Elektroden aufgenommen, von wo sie dann mit Hilfe geeigneter Kühlflüssigkeiten abgeführt wird. Es ist deshalb nicht mehr notwendig, das Lasergas selbst mit einem besonderen Kühlkreislauf durch den Entladungsraum zu pumpen.

Zum Stand der Bandleiterlasertechnik wird auf den Artikel von R. Nowack et al, "Diffusionsgekühlte CO₂-Hochleistungslaser in Kompaktbauweise" in "Laser und Optoelektronik", 23 (3)/ 1991 hingewiesen. Bisher standen der Umsetzung des obenbeschriebenen Bandleiterlaserkonzepts in eine praxistaugliche Konstruktion noch erhebliche Schwierigkeiten entgegen. Als besonders problematisch stellte sich die Auswahl eines geeigneten Elektrodenmaterials heraus. Die Elektroden dienen einerseits zur Einkoppelung der Hochfrequenzenergie, werden also mit hohen Strömen belastet. Außerdem sollen sie einen möglichst verlustfreien optischen Wellenleiter bilden und die Wärme gut ableiten. Darüberhinaus sind nur Bauteile und Materialien geeignet, durch die ein langzeitstabiler Gleichgewichtszustand des Gasgemisches im Laser gewährleistet wird. Im genannten Artikel wird beispielsweise die zu erwartende, unerwünscht hohe CO₂-Zersetzung aufgrund von Kupferelektroden erörtert. Weitere Forderungen an den Aufbau gekühlter und mit Mitteln zur gegenseitigen Distanzierung versehener Elektroden sind die Optimierung des Gewichts, ausreichende Stabilität gegenüber mechanischen bzw. thermischen Belastungen und nicht zuletzt die kostengünstige Herstellbarkeit.

Aus der eingangs genannten EP-A-0 477 865 ist ein Bandleiterlaser mit Massivelektroden bekannt geworden, in denen Kühlkanäle in Form von Langlöchern eingebracht sind. Dieser Laser kann zur Erzielung höherer Leistungen nur theoretisch ohne weiteres in der Länge und in der Breite skaliert werden. Tatsächlich bereitet es jedoch Schwierigkeiten, die dann erforderlichen großen ebenen Flächen mit der notwendigen Genauigkeit zu bearbeiten. Außerdem sind solche großen Flächen nicht genügend formstabil, so daß die Wellenleitereigenschaften verloren gehen.

Die Aufgabe der Erfindung besteht in der Schaffung eines Lasers der eingangs genannten Art, mit dem ohne großen konstruktiven Aufwand die beschriebenen Nachteile weitgehend vermieden und insbesondere ein Kompromiß zwischen guter Kühlung des Lasergases, geringen Wellenleiterverlusten und der Möglichkeit eines langzeitstabilen (ca. 10.000 Betriebsstunden) Verhaltens im abgeschlossenen Betrieb erzielt werden kann.

Diese Aufgabe wird erfindungsgemäß dadurch gelöst, daß bei einem Bandleiterlaser der eingangs genannten Art jede Elektrode als Verbund aus einem Trägerteil mit mechanisch stabilem Profil und einem damit hartverlöteten oder verschweißten, dem Entladungsspalt zugewandten plattenförmigen Elektrodenteil mit integrierten Kühlkanälen ausgebildet ist.

Weiterbildungen der Erfindung sind Gegenstand von Unteransprüchen.

Im folgenden wird die Erfindung anhand von Ausführungsbeispielen und den Figuren der Zeichnung näher erläutert. Es zeigen
Figur 1 schematisch und im Schnitt eine Ausführungsform eines erfindungsgemäßen Verbundelektroden-Paares
Figur 2 eine Ausführungsform eines erfindungsgemäßen Abstandshalters.
Figur 3 verschiedene ausführungsformen von erfindungsgemäß ausgebildeten Kühlkanälen.

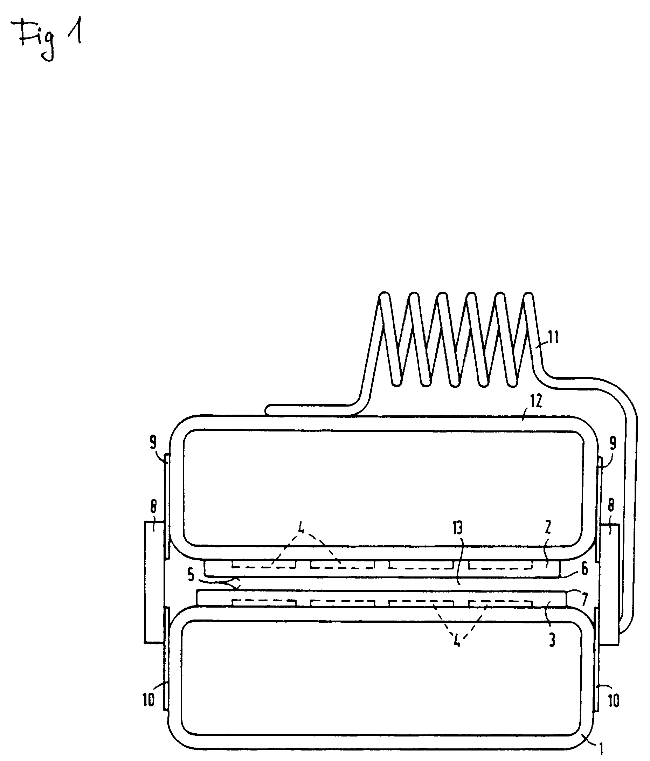

In Figur 1 ist eine untere 1,3 und eine obere 2,12 Verbundelektrode dargestellt, die durch den Entladungsspalt 13 getrennt sind. Im gezeigten Ausführungsbeispiel sind die beiden Trägerteile 1 und 12 als Hohlprofile mit annähernd rechteckigem Querschnitt ausgebildet und bestehen aus V2A-Stahl. Prinzipiell geeignet sind nicht nur die dargestellten Hohlprofile, sondern auch U-förmige Profile, die allerdings eine geringere Steifigkeit aufweisen. Die Steifigkeit von U-förmigen Profilen kann durch Längsversteifungen und die der dargestellten Rechteckprofile durch zusätzliche Querversteifungen weiter verstärkt werden.

In FIG 1 sind nahezu identische Elektrodenteile 2 bzw. 3, die je nach Resonatortyp nicht in jedem Fall unbedingt rechteckförmig ausgebildet sein müssen, mittels Hartlöten bei mehr als 700 °C fest mit den dem Entladungsspalt 13 zugewandten Flächen der Trägerteile 1 bzw. 12 verbunden. Durch das beim gewählten Aufbau prinzipiell für alle Verbindungen einsetzbare Hartverlöten wird ein verwindungsfreier konstruktiver Aufbau erleichtert, da es eine 4-5 mal höhere Zugfestigkeit als Weichlot besitzt. Außerdem ist Hartlot erheblich dichter als Weichlot, was der Betriebsdauer des Lasersystems zugute kommt. Hartlot ist vor allem auch wesentlich temperaturstabiler und erlaubt ein zur Entfernung von Restgasen aus dem Laser erforderliches Ausheizen bei ca. 400° C, wodurch die Ausheizzeit wesentlich verkürzt und die Betriebsdauer verlängert wird.

V2A Stahl ist unmagnetisch, kann unproblematisch mit Kupfer kombiniert werden und besitzt darüber hinaus einen annähernd gleichen thermischen Ausdehnungskoeffizienten wie Kupfer. In die Kupfer-Elektrodenteile 2 bzw. 3 sind rückseitig, d.h. zu den Trägerteilen 12 bzw. 1 hin offene Kühlkanäle 4 eingefräst. Prinzipiell könnten auch Kühlschlangen auf den vom Entladungsspalt 13 abgewandten Flächen zweier Uförmiger Trägerteile vorgesehen werden, jedoch zeichnet sich die dargestellte Ausführungsform durch eine besonders effektive und gleichmäßige Kühlung aus.

Die großflächigen Elektrodenteile 2 und 3, die zusammen mit den Trägerteilen 12 und 1 auch segmentiert ausgebildet sein können, weisen je nach Laserleistung eine typische Länge von 300 bis 700 mm und ein Längen/Breitenverhältnis von ca. 6:1 auf und stehen sich im Abstand von ca. 1,4 bis 1,7 mm gegegenüber. Im Ausführungsbeispiel nach Figur 1 beträgt ihr Abstand 1,68 mm und sie sind, ähnlich wie die Edelstahl-Trägerteile 1 und 12 ca. 2mm dick. Die als Rechteckkupferplatten ausgebildeten Elektrodenteile 2 und 3, die an das Plasma angrenzen und dort Wellenleiterflächen 5 bilden, können auf relativ einfache Weise diamant-plangefräst bzw. geschliffen werden, so daß sich im Bandleiterlaser die Moden praktisch ungedämpft ausbreiten. Sie zeichnen sich durch besonders gute Wärmeleiteigenschaften und durch geringe optische Verluste aus. Es ist auch ohne weiteres möglich, die Wellenleiterflächen 5 metallisch so zu beschichten, beispielsweise galvanisch mit Gold, daß sie zusätzlich eine katalytische, den Wirkungsgrad des Lasers steigernde Funktion erfüllen. Als Beschichtung kommt weiterhin eine in Aufdampftechnik aufgebrachte Ni-Barriereschicht und eine darüberliegende Au-Schicht in Frage, die jeweils ca. 0,1 µm dick sein können.

Um fertigungstechnische Toleranzen aufzufangen, ist es vorteilhaft, Elektrodenteile 2 und 3 mit etwas unterschiedlicher Breite (ca. 1 mm Unterschied) übereinander anzuordnen, so daß die Eckkanten 6 und 7 geringfügig gegeneinander versetzt sind. Um die Wirkungsweise des Lasers nicht wesentlich zu verschlechtern, ist es darüber hinaus vorteilhaft, die Krümmungsradien der Eckkanten 6 und 7 zu optimieren, d. h. möglichst klein zu halten. Untersuchungen der Feldstärkeüberhöhung ergaben, daß für einen Überhöhungsfaktor kleiner als 1,5 der Krümmungsradius größer als etwa 0,5 sein muß.

Das Entladungsvolumen des Lasers wird mit HF bei 83 bis 125 MHz angeregt. Es können handelsübliche HF-Generatoren mit 2,5 kW cw-Leistung und 6 kW-Superpulsleistung verwendet werden. Durch eine Anpaßschaltung muß dabei die Impedanz des Generators auf diejenige des Bandleiters transformiert werden. In Figur 1 sind Spulen 11 zwischen den Bandleiterelektroden angedeutet, die in ansich bekannter Weise die Spannungsverteilung zwischen den Elektroden so weit homogenisieren, daß ein gleichmäßiges Brennen des HF-Plasmas gewährleistet ist. Nicht dargestellt in Figur 1 ist die für den Laserbetrieb natürlich notwendige vakuumdichte Einkapselung der Elektrodenanordnung in ein vorzugsweise zylinderförmiges, von außen gekühltes Stahlgehäuse, dessen Stirnplatten bzw. dessen Resonatorspiegel beispielsweise durch gekühlte Invarstäbe abstandskonstant gehalten werden. Verschiedene Maßnahmen sind notwendig, um ein Wandern der Resonatorspiegel durch Erwärmung zu verhindern und die mechanische Stabilität des gesamten konstruktiven Laseraufbaus gegenüber Temperaturbelastungen zu gewährleisten. Dazu wird auf die bereits genannte EP-A-0 477 865 und auf die am gleichen Tag wie die vorliegende Anmeldung eingereichte Patentanmeldung EP-A-0 585 481 mit dem Titel "Bandleiterlaser-Resonator" hingewiesen .

In Figur 1 sind Abstandshalter 8 dargestellt, die vorzugsweise aus Al₂O₃-Keramik bestehen und die das Verbundelektroden-Paar gegeneinander isolieren und zueinander auf konstantem, temperaturunabhängigen Abstand halten sollen. Sie sind jeweils an Plättchen 9 und 10 aus speziellen Legierungen wie Invar oder Kovar befestigt, vorzugsweise durch Verlöten mittels einer CuAu-Legierung, wobei die Plättchen 9 und 10 ihrerseits an die Trägerteile 1 und 12 angeschraubt, angelötet oder angeschweißt sind.

Bei dieser konstruktiven Auslegung wurden Untersuchungsergebnisse berücksichtigt, wonach die Abstandshalter während der Aufwärmphase kurz nach Inbetriebnahme des Lasers den größten Kräften und thermischen Spannungen ausgesetzt sind. Auch bei einer Betriebstemperatur von zunächst nur 10 °C und einer Kühlwassertemperatur von 20 bis 25 °C besteht hinsichtlich der Spannungen erfindungsgemäß ein Sicherheitsfaktor von etwa 4. Die exakte Distanzierung der Bandleiterelektroden ist eine wesentliche Voraussetzung für die Strahlstabilität und damit auch für die Qualität. Die unerwünschte unsymmetrische mechanische bzw. thermische Beanspruchung der quaderförmigen Al₂O₃-Abstandshalter 8, deren Form allerdings noch, wie weiter unten erläutert wird, verbessert werden kann, kann noch weiter verringert werden, indem die Abstandshalter durch einen zusätzlichen Keramikmantel gegenüber dem heißen Plasma abgeschirmt werden. In den Fällen, in denen für die Abstandshalter vorteilhaft ein Material wie Zerodur oder Vakodil verwendet wird, das nur eine sehr geringe oder gar keine Längenausdehnung aufweist, muß, beispielsweise durch einen Keramikmantel, für eine elektrische Isolierung gesorgt werden. Darüber hinaus wird erfindungsgemäß vorgeschlagen, die Plättchen 9 und 10 ein-oder zweimal nahezu rechtwinklig gegenüber dem jeweiligen Trägerteil, an dem sie befestigt sind, abzuwinkeln und somit die Abstandshalter 8 an den derart abgewinkelten Plättchen 9 und 10 zu befestigen. Dies ist insbesondere deshalb von Vorteil, da die Hohlprofile fertigungsmäßig eine Toleranz von ca. 0,3 mm aufweisen. Insgesamt wird durch die Verbindung zweier nahezu identischer Verbundelektroden mittels der beschriebenen Abstandshalter eine Verzugsfreiheit bei Variation der Leistung zwischen 10 und 100 %, entsprechend ca. 1 bis 10 W/cm thermischer Belastung der Elektrodenfläche erreicht.

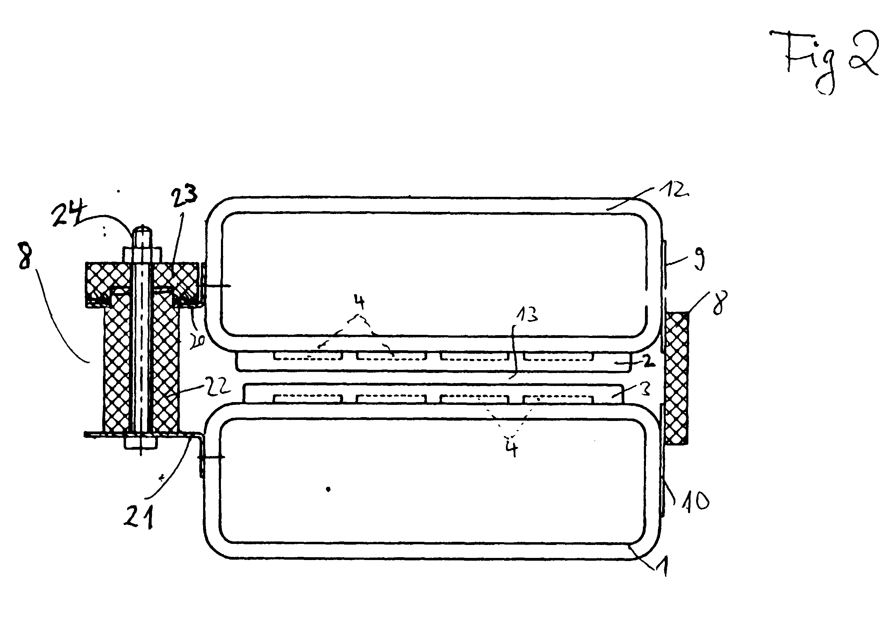

FIG 2 zeigt eine besonders vorteilhafte Ausführungsform eines Abstandshalters 8. Dieser besteht aus zwei Haltewinkeln 20 und 21 und mehreren Keramikteilen 22, 23 die miteinander fest verschraubt werden. Dazu kann beispielsweise eine keramische Kugelknopfschraube 24 verwendet werden. Die Haltewinkel 20, 21 werden mit den Trägerteilen 12, 1 verschweißt und können (in der FIG 2 nicht dargestellt) auch diagonal zu diesen noch verstärkt werden. Durch die Verschraubung stehen die Keramikteile 22, 23 unter einer mechanischen Vorspannung, wodurch der so gebildete Abstandshalter 8 um die Preßkraft der Schraube 24 mehr Zugkraft als bisher verträgt.

Bei der Ausführung der Kühlkanäle hat es sich erfindungsgemäß als günstig erwiesen, das Kühlwasser bei den in Figur 1 dargestellten jeweils vier Kühlkanälen 4 in jedem Elektrodenteil 2 und 3 in den beiden mittleren Kühlkanälen 4 gleichzeitig parallel vorlaufen zu lassen und es links bzw. rechts außen zurückzuleiten. Es besteht jedoch auch die Möglichkeit, zwischen dem mit Kühlkanälen versehenen Elektrodenteil 2 bzw. 3 und dem zugehörigen Trägerteil 12 bzw. 1 ein Zwischenkupferstück 14 vorzusehen.

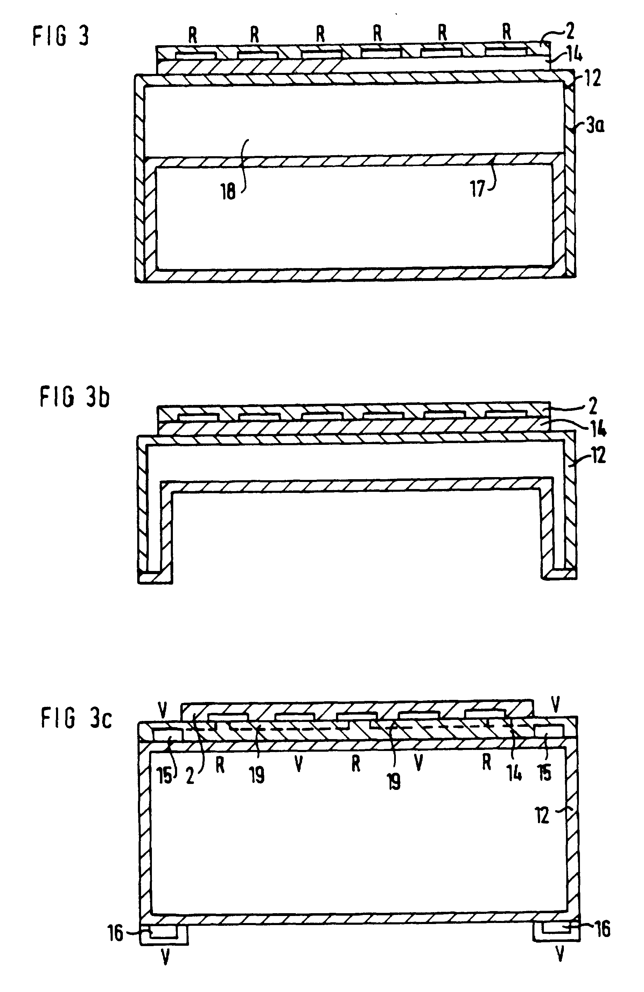

Im Zwischenkupferstück 14 können beispielsweise, wie in FIG 3c dargestellt, Kühlkanäle 15 vorgesehen werden, die für den Vorlauf des Kühlmittels benutzt werden, während die Kühlkanäle im eigentlichen Elektrodenteil 2, 3 alternierend dem Vor- und Rücklauf dienen. Auch auf der Unterseite des Trägerteils 12 können Kühlkanäle 16 vorgesehen werden. Schließlich liegt es, wie in FIG 3a dargestellt, auch im Rahmen der Erfindung, daß das Zwischenkupferstück 14 und das Elektrodenteil 2 tragende rechteckförmige Trägerteil 12 durch eine Längswand 17 zu unterteilen und den Wasservorlauf in dem so geschaffenen, dem Elektrodenteil 2 zugewandten Teilraum 18 stattfinden zu lassen. Die Kühlkanäle im Elektrodenteil dienen in diesem Fall alle dem Rücklauf. FIG 3b zeigt eine weitere mögliche Ausführungsform. Entscheidend für alle erfindungsgemäßen Ausführungen der Wasserführung ist letztlich, daß selbst bei schnellem Umschalten der Laserleistung, die mit einer veränderten Wärmeströmung zu den Elektroden einhergeht, ein mechanisch stabiler Zustand des Bandleiterkanals möglichst schnell erreicht wird. Ein besonderer Vorteil der in FIG 3 dargestellten Ausführungsformen liegt darin, daß das Trägerteil 12 in allen Stadien konstant auf der Vorlauftemperatur des Kühlwassers gehalten wird, was sonst trotz der Kühlung des dem Plasma unmittelbar ausgesetzten Elektrodenteils 2 nicht gewährleistet wäre. Damit wird ein Verziehen des Rechteckprofils verhindert.

Bei weiteren Untersuchungen des erfindungsgemäßen Lasersystems wurde festgestellt, daß bei diskreten Pulsfrequenzen akustische Resonanzschwingungen angeregt werden, die nur durch geeignete Anordnung der Abstandshalter und weitere, mit dem beschriebenen konstruktiven Aufbau kompatible Maßnahmen vermieden werden können. Bei jedem Zünden des Plasmas im Takt der Pulswiederholfrequenz dehnt es sich infolge der Erwärmung stark aus. Die Resonanzschwingungen führen zu Druckinhomogenitäten im Bandleiterlaser insbesondere an den Stellen der Abstandshalter, die über ihre unmittelbaren Folgen hinaus auch zu einer starken Gaszersetzung bzw. zur Lichtbogenbildung führen können. In diesem Zusammenhang hat es sich erfindungsgemäß als günstig erwiesen, die Abstandshalter nicht an den Stellen der Schwingungsbäuche anzuordnen, sondern dort zum Druckausgleich dienende Bohrungen in den Elektroden vorzusehen. Die Abstandshalter können ferner, zur Vermeidung von brechenden Kanten, nicht quaderförmig, sondern zylinderförmig oder oval ausgebildet sein. In FIG 3c sind dem Druckausgleich dienende Querrillen 19 angedeutet, die beim gewählten Aufbau ohne weiteres durch zwischen die Kühlkanäle passende Bohrungen durch die darüberliegende Metallteile hindurch angebohrt werden können.

## Patentansprüche

1. Hochfrequenzangeregter diffusionsgekühlter Bandleiterlaser, mit zwei mit Kühlkanälen (4) und mit Mitteln (8,9,10) zur gegenseitigen Fixierung versehenen Metallelektroden, zwischen denen ein Entladungsspalt (13) gebildet ist, wobei die Elektroden dem Entladungsspalt zugewandte Wellenleiterflächen (5) aufweisen und wobei ihre Breite ein Vielfaches ihres Abstandes beträgt, und mit Resonatorspiegeln, die einen instabilen Resonator bilden,
**dadurch gekennzeichnet**, daß jede Elektrode als Verbund aus einem Trägerteil (1, 12) mit mechanisch stabilem Profil und einem damit hartverlöteten oder verschweißten, dem Entladungsspalt (13) zugewandten plattenförmigen Elektrodenteil (3, 2) mit integrierten Kühlkanälen (4) ausgebildet ist.

2. Bandleiterlaser nach Anspruch 1, bei dem das Trägerteil (1, 12) einen mindestens U-förmigen, vorzugsweise einen annähernd rechteckigen Querschnitt aufweist.

3. Bandleiterlaser nach Anspruch 1 oder 2, bei dem das Elektrodenteil (3, 2) zum Trägerteil (1, 12) hin offene Kühlkanäle (4) aufweist.

4. Bandleiterlaser nach einem der Ansprüche 1 bis 3, bei dem das Elektrodenteil (3, 2) aus Kupfer besteht.

5. Bandleiterlaser insbesondere nach Anspruch 4, bei dem das Trägerteil (1, 12) aus Edelstahl besteht.

6. Bandleiterlaser nach einem der Ansprüche 1 bis 5, bei dem die Eckkanten (6, 7) der Elektrodenteile (2, 3) geringfügig gegeneinander versetzt sind.

7. Bandleiterlaser nach einem der Ansprüche 1 bis 6, bei dem die Krümmungsradien der Eckkanten (6, 7) optimiert sind.

8. Bandleiterlaser nach einem der Ansprüche 1 bis 7, bei dem die Wellenleiterflächen (5) der Elektrodenteile (2, 3) metallisch beschichtet sind.

9. Bandleiterlaser nach einem der Ansprüche 1 bis 8, bei dem metallische, an den beiden Trägerteilen (1,12) befestigte Plättchen oder Winkel (9, 10) und an diesen befestigte keramische Abstandshalter (8) die beiden Verbundelektroden abstandskonstant und temperaturunabhängig miteinander verbinden.

10. Bandleiterlaser nach Anspruch 9, bei dem die Plättchen oder Winkel (9, 10) und mindestnes zwei Keramikteile (22, 23) des Abstandshalters (8) unter Vorspannung miteinander verschraubt sind.

11. Bandleiterlaser nach einem der Ansprüche 3 bis 10, bei dem das Kühlwasser in jedem Elektrodenteil (2, 3) durch zwei nebeneinanderliegende mittlere Kühlkanäle (4) parallel zugeführt und durch je einen links und rechts außen angeordneten Kühlkanal (4) wieder zurückgeleitet ist.

12. Bandleiterlaser nach einem der Ansprüche 3 bis 11, bei dem zwischen dem Elektrodenteil (3, 2) und dem zugehörigen Trägerteil (1, 12) jeweils ein Zwischenkupferstück (14) angeordnet ist.

13. Bandleiterlaser nach Anspruch 12, bei dem im Zwischenkupferstück (14) Kühlkanäle (15) vorgesehen sind, die insbesondere zum Kühlwasservorlauf vorgesehen sind.

14. Bandleiterlaser nach einem der Ansprüche 3 bis 13, bei dem in jedem Trägerteil (1, 12) ein Hohlraum oder ein Teilraum (18) insbesondere für den Kühlwasservorlauf vorgesehen ist.

15. Bandleiterlaser nach einem der Ansprüche 1 bis 14, bei dem die Abstandshalter (8) außerhalb der Schwingungsbäuche von sich im Bandleiterlaser ausbildenden Resonanzschwingungen angeordnet sind und bei dem die Elektroden an den Stellen der Druckinhomogenitäten mit Bohrungen versehen sind.

## Claims

1. Radio-frequency-excited, diffusion-cooled stripline laser having two metal electrodes which are provided with cooling channels (4) and with means (8, 9, 10) for mutual fixing and between which a discharge gap (13) is formed, the electrodes having waveguide surfaces (5) facing the discharge gap and their width being a multiple of their separation, and having resonator mirrors which form an unstable resonator, characterized in that each electrode is designed as a composite of a carrier part (1, 12) having a mechanically robust profile and of an electrode part (3, 2) which is silver-soldered or welded thereto, faces the discharge gap (13), is in the form of a plate and has integrated cooling channels (4).

2. Stripline laser according to Claim 1, in the case of which the carrier part (1, 12) has an at least U-shaped cross-section, preferably an approximately rectangular cross-section.

3. Stripline laser according to Claim 1 or 2, in the case of which the electrode part (3, 2) has cooling channels (4) which are open towards the carrier part (1, 12).

4. Stripline laser according to one of Claims 1 to 3, in the case of which the electrode part (3, 2) is composed of copper.

5. Stripline laser, preferably according to Claim 4, in the case of which the carrier part (1, 12) is composed of stainless steel.

6. Stripline laser according to one of Claims 1 to 5, in the case of which the corner edges (6, 7) of the electrode parts (2, 3) are slightly offset with respect to one another.

7. Stripline laser according to one of Claims 1 to 6, in the case of which the radii of curvature of the corner edges (6, 7) are optimized.

8. Stripline laser according to one of Claims 1 to 7, in the case of which the waveguide surfaces (5) of the electrode parts (2, 3) are metallically coated.

9. Stripline laser according to one of Claims 1 to 8, in the case of which metallic platelets or angles (9, 10), which are attached to both carrier parts (1, 12), and ceramic spacers (8), which are attached thereto, connect the two composite electrodes to one another such that their spacing is constant and their temperatures are mutually independent.

10. Stripline laser according to Claim 9, in the case of which the platelets or angles (9, 10) and at least two ceramic parts (22, 23) of the spacer (8) are screwed to one another in a prestressed manner.

11. Stripline laser according to one of Claims 3 to 10, in the case of which the cooling water in each electrode part (2, 3) is supplied in parallel through two central cooling channels (4) located side by side, and is passed back again through in each case one cooling channel (4) which is arranged externally on the left-hand side and right-hand side.

12. Stripline laser according to one of Claims 3 to 11, in the case of which in each case one intermediate copper piece (14) is arranged between the electrode part (3, 2) and the associated carrier part (1, 12).

13. Stripline laser according to Claim 12, in the case of which cooling channels (15) are provided in the intermediate copper piece (14), which cooling channels (15) are preferably provided for feeding cooling water.

14. Stripline laser according to one of Claims 3 to 13, in the case of which a cavity or a partial space (18) is provided, preferably for feeding cooling water, in each carrier part (1, 12).

15. Stripline laser according to one of Claims 1 to 14, in the case of which the spacers (8) are arranged away from the oscillation antinodes of resonant oscillations which are formed in the stripline laser, and in the case of which the electrodes are provided with holes at the points of the pressure inhomogeneities.

## Revendications

1. Laser à ruban excité en haute fréquence et refroidi par diffusion, comportant deux électrodes métalliques, qui sont pourvues de canaux de refroidissement (4) et de moyens (8,9,10) destinés à réaliser une fixation mutuelle, et entre lesquelles est formée une fente de décharge (13), les électrodes comportant des surfaces (5) formant guides d'ondes, tournées vers la fente de décharge, et leur largeur étant égale à un multiple de leur distance, et comportant des miroirs de cavité résonnante, qui forment un résonateur instable,
caractérisé par le fait que chaque électrode est réalisée sous la forme d'un ensemble composite comprenant une partie de support (1,12) de profil mécanique stable, et d'une partie d'électrode en forme de plaque (3,2) qui est fixée par brasage tendre ou par soudage à la partie de support et est tournée vers la fente de décharge (13) et dans laquelle sont intégrés des canaux de refroidissement (14).

2. Laser à ruban suivant la revendication 1, dans lequel la partie de support (1,12) comprend une section transversale au moins en forme de U et de préférence une section transversale approximativement rectangulaire.

3. Laser à ruban suivant la revendication 1 ou 2, dans lequel la partie d'électrode (3,2) comprend des canaux de refroidissement (4), qui sont ouverts en direction de la partie de support (1,12).

4. Laser à ruban suivant l'une des revendications 1 à 3, dans lequel la partie d'électrode (3,2) est en cuivre.

5. Laser à ruban, notamment suivant la revendication 4, dans lequel la partie de support (1,12) est en acier fin.

6. Laser à ruban suivant l'une des revendications 1 à 5, dans lequel les bords d'angle (6,7) des parties d'électrodes (2,3) sont légèrement décalés les uns par rapport aux autres.

7. Laser à ruban suivant l'une des revendications 1 à 6, dans lequel les rayons de courbure des bords d'angle (6,7) sont optimisés.

8. Laser à ruban suivant l'une des revendications 1 à 7, dans lequel les surfaces (5) formant guide d'ondes des parties d'électrodes (2,3) sont pourvues d'un revêtement métallique.

9. Laser à ruban suivant l'une des revendications 1 à 8, dans lequel des plaquettes ou cornières (9,10), qui sont fixées aux deux parties de support (1,12), et des entretoises céramiques (8), qui sont fixées à ces plaquettes ou cornières, relient entre elles les deux électrodes composites, et ce en les maintenant à une distance constante et indépendante de la température.

10. Laser à ruban suivant la revendication 9, dans lequel les plaquettes ou cornières (9,10) et au moins deux pièces céramiques (22,23) de l'entretoise (8) sont vissées l'une à l'autre sous précontrainte.

11. Laser à ruban suivant l'une des revendications 3 à 10, dans lequel l'eau de refroidissement est envoyée, dans chaque partie d'électrode (2,3), parallèlement par deux canaux de refroidissement (4) centraux côte à côte, et est renvoyée par des canaux de refroidissement (4) disposés respectivement à gauche et à droite.

12. Laser à ruban suivant l'une des revendications 3 à 11, dans lequel une pièce intermédiaire en cuivre (14) est disposée entre chaque partie d'électrode (3,2) et sa partie de support associée (1,12).

13. Laser à ruban suivant la revendication 12, dans lequel dans la pièce intermédiaire en cuivre (14) sont prévus des canaux de refroidissement (15), qui sont prévus notamment pour le circuit aller de l'eau de refroidissement.

14. Laser à ruban suivant l'une des revendications 3 à 13, dans lequel une cavité ou une partie de cavité (18) est prévue dans chaque partie de support (1,12), notamment pour le circuit aller de l'eau de refroidissement.

15. Laser à ruban suivant l'une des revendications 1 à 14, dans lequel les entretoises (8) sont disposées à l'extérieur des ventres d'oscillation de résonance, qui se forment dans le laser à ruban, et dans lequel les électrodes comportent des perçages, aux emplacements des hétérogénéités de pression.
